# EUROPÄISCHE PATENTSCHRIFT

(11) **EP 2 285 611 B1**
(45) Veröffentlichungstag und Bekanntmachung des Hinweises auf die Patenterteilung: **10.02.2016**
(21) Anmeldenummer: 08784176.3
(22) Anmeldetag: 31.05.2008
(51) Int. Cl.: B60J 7/12, B60J 7/14, B60R 13/02

(54) **CABRIOLET-FAHRZEUG MIT EINEM INNENHIMMEL**
CABRIOLET VEHICLE COMPRISING A ROOFLINING
VÉHICULE CABRIOLET POURVU D'UN HABILLAGE DE PLAFOND

(30) Priorität: 22.06.2007 DE 102007028907
(43) Veröffentlichungstag der Anmeldung: 23.02.2011
(73) Patentinhaber: Wilhelm Karmann GmbH, 49084 Osnabrück (DE); Valmet Automotive Oy, 23500 Uusikaupunki (FI)
(72) Erfinder: RICHTER, Markus, 49545 Tecklenburg (DE); BENSMANN, Heiner, 49124 Georgsmarienhütte (DE); SCHRAMM, Holger, 49143 Bissendorf (DE)
(74) Vertreter: Kronthaler, Schmidt & Coll.
(86) Internationale Anmeldenummer: PCT/DE2008/000917
(87) Internationale Veröffentlichungsnummer: WO 2009/000224

(56) Entgegenhaltungen:
- WO-A-2005/061254
- DE-A1- 3 914 639
- DE-A1- 10 147 016
- DE-A1- 10 201 618
- DE-C1- 4 031 270

## Beschreibung

Die Erfindung betrifft ein Fahrzeugdach für ein Cabriolet-Fahrzeug, das über seitliche Gestängeteile beweglich gehalten ist und das einen dem Insassenraum zugewandten Innenhimmel umfasst, nach dem Oberbegriff des Anspruchs 1 sowie ein Cabriolet-Fahrzeug mit einem beweglichen Fahrzeugdach.

Es sind zahlreiche Cabriolet-Fahrzeuge bekannt, deren Dächer jeweils eine separate, dem Innenraum zugewandte Bezuglage, einen sog. Innenhimmel, aufweisen. Dabei stellt sich der Konflikt, dass der Innenhimmel einerseits bei geschlossenem Dach möglichst einheitlich und großflächig wirken soll, bei Einfalten des Daches jedoch derart verschmälern muss, dass er die vertikalen Bewegungsebenen von seitlichen Gestängeteilen, die das Dach halten, freigibt und nicht zwischen einfaltenden Gestängeteilen eingeklemmt werden kann.

Die DE 10 2005 042 017 A1 zeigt einen Innenhimmel, der in seinem äußeren Querrandbereich flächig mit darüber liegenden Schwenkklapppen verbunden ist, die um längs zum Fahrzeug gelegene Achsen nach innen einklappbar sind. Dabei ergibt sich jedoch ein scharfer Knick im Innenhimmel, der auf Dauer zu einer sichtbaren Linie in diesem führen kann, insbesondere wenn dieser aus hochwertigem Material, wie etwa Alcantara, ausgebildet ist. Zudem erfordert eine solche Ausbildung mehrere Federn zur Bewegung der Schwenkklappen, die den Innenhimmel in eingeklappter Stellung durchgreifen, so dass in diesem zugehörige Ausnehmungen zwischen den mehreren hintereinander folgenden Klappen vorhanden sein müssen und das gewünschte einheitliche Erscheinungsbild des Innenhimmel erheblich stören.

Die Druckschrift DE 39 14 639 A1 zeigt ein Klappverdeck für Kraftfahrzeuge, bei dem ein einen Innenhimmel bildender innerer Bezugsstoff, welcher über dessen bei geschlossenem Klappverdeck eine Fahrzeugkarosserie überragende Höhe hin an einen Hauptspriegel des Klappverdecks angebunden ist. Um den den Innenhimmel bildenden Stoff beim Schließen des Klappverdecks selbsttätig in eine gestraffte Lage zu verbringen, ist dieser an seinem dem Hauptspriegel zugeordneten Rand mit einem Zugseil verbunden, mittels welchem der Innenhimmel mit einem das Zugseil umfassenden Umschlag in einer an einer Stirnseite des Hauptspriegels angeschlossenen rohrförmigen und schlitzförmig ausgebildeten Führungsschiene aufgenommen ist.

Aus der DE 102 01 618 A1 ist eine Vorrichtung bekannt, über die ein Verdeckbezug an Teilen eines Cabriolet-Verdecks festlegbar ist. Die Vorrichtung umfasst eine mit einem Abschlussbereich des Verdeckbezugs verbindbare Profilleiste und eine zweite, an der ersten Profilleiste festlegbare Profilleiste. Im Bereich der zweiten Profilleiste ist eine Dichtung zur Aufnahme einer Fensterscheibe angeordnet. Weiterhin weist die zweite Profilleiste eine Ausformung auf, in deren Bereich ein Innenhimmel anordenbar ist.

Der Erfindung liegt die Aufgabe zugrunde, ein Fahrzeugdach für ein Cabriolet-Fahrzeug zu schaffen, dessen Innenhimmel auch bei Vorsehen von Dichtungen gegenüber Seitenscheiben besonders weit nach quer außen reicht.

Die Erfindung löst dieses Problem durch ein Fahrzeugdach mit den Merkmalen des Anspruchs 1 sowie durch ein Cabriolet-Fahrzeug mit den Merkmalen des Anspruchs 13. Vorteilhafte Ausgestaltungen des Gegenstandes der Erfindung ergeben sich aus den weiteren Ansprüchen.

Mit der Ausbildung nach Anspruch 1 ist durch die Erstreckung des Innenhimmels bis unter seitliche Profile, die bei geschlossenem Dach gegenüber Seitenscheiben dichten, eine maximierte Breite des Innenhimmels erreicht. Durch die Anlage des Innenhimmels an diese Profile bilden diese einen Rahmen für den Innenhimmel. Quer zwischen diesen durch die Profile gebildeten Randabstützungen kann der Innenhimmel frei und ohne Unterstützung gespannt sein. Dies sorgt für einen frei hängenden und knickfreien Verlauf des Innenhimmels zwischen den äußeren Längsrahmen. Er wird dadurch über seine gesamte lichte Weite zwischen den Rahmen von den Insassen wie eine frei hängende Bespannung empfunden. Knickstellen treten nicht auf.

Eine stabile und bei geschlossenem Dach besonders weit nach quer außen gezogene Ausbildung des Innenhimmels wird erreicht, indem dieser mit seinem äußeren Rand in einen Kanal der seitlichen Profile eingreift. Dieser ist einem äußeren, eine Dichtung gegenüber seitlichen Scheiben tragenden Schenkel der Profile unmittelbar benachbart. Der Spalt zwischen dem äußeren Querrand des Innenhimmels in Querrichtung gegenüber der Dichtung zu den seitlichen Scheiben kann dadurch besonders klein sein und vorteilhaft weniger als fünf Millimeter betragen.

Mit einer Weiterbildung nach Anspruch 3 ist erreicht, dass nicht nur in Querrichtung der Innenhimmel eine möglichst große einheitliche Fläche ergibt, sondern auch in Längsrichtung. Idealerweise ist damit eine außerhalb der Heckscheibe durchgehende und unterbrechungsfrei gespannte Fläche des Innenhimmels vom Windschutzscheibenrahmen bis zum hinteren Dachende und bis jeweils an wenige Millimeter an die seitlichen Scheiben heran ermöglicht.

Wenn gemäß der Weiterbildung nach Anspruch 4 der Innenhimmel über zumindest einen Teil seiner Längserstreckung seitlich über Spannelemente gehalten ist, die seitliche Gestängeteile untergreifen und von seitlich außen umlaufen, ist es nicht nur möglich, den Innenhimmel bei geschlossenem Dach weit nach außen zu ziehen, sondern auch, bei Einfalten des Daches durch Entspannung der Spannelemente einen Rückzug des Innenhimmels in den Querraum zwischen den seitlichen Gestängeteilen zu bewirken, um damit jede Störung des Einfaltens der Gestängeteile zu vermeiden.

Die Spannelemente können von außen in Profile eingreifen, die Träger von Dichtungen zur Abdichtung gegenüber seitlichen Scheiben sind. Durch diesen Zug von außen wird die breite Querspannung der Fläche des Innenhimmels unterstützt.

Für dieses Eingreifen von außen weisen die Profile vorteilhaft einen äußeren Schenkel zur Halterung der Dichtung und beabstandet hierzu einen weiter innen liegenden Schenkel auf, wobei der innere Schenkel von dem Innenhimmel untergriffen ist und dessen Rand in einen nach unten offenen Kanal zwischen dem äußeren und dem inneren Schenkel eingreift und hier Bohrungen oder ähnliche Ausnehmungen für die Spannelemente verdeckt ausgebildet sein können.

Diese können durch Zugseile gebildet sein und dabei insbesondere so verlaufen, dass sie bei beginnendem Einfalten des Daches und die entsprechende Verlagerung der Dachgestängeteile automatisch entspannen.

Eine Mehrzahl von Spannelementen sichert eine gleichmäßige Zugkrafteinleitung auf den geschlossenen Innenhimmel.

Wenn das Dach auf seiner dem Insassenraum zugewandten Seite im Nahbereich jedes Querrandes zumindest eine gewölbte Führungsfläche zur formgebenden Anlage des Innenhimmels an diese aufweist, müssen die Spannelemente nicht über den gesamten Längsverlauf des Daches verteilt sein, sondern nur in solchen Bereichen, in denen sich beim Einfalten eine besondere Notwendigkeit für das Rückziehen des Innenhimmels in Querrichtung ergibt, insbesondere im bezüglich der Längserstreckung mittleren Bereich.

Der Innenhimmel ist vorteilhaft beim Schließen des Daches über die fest mit der Dachaußenhaut oder mit Gestängeteilen verbundene Führungsfläche bewegbar und kann dadurch eine gute Spannung erreichen; die Führungsfläche kann zum Beispiel fest mit etwa einem vorderen Plattenteil eines Retractable Hardtops verbunden sein.

Weitere Vorteile und Einzelheiten ergeben sich aus einem in der Zeichnung dargestellten Ausführungsbeispiel des Gegenstandes der Erfindung.

In der Zeichnung zeigt:
- Fig. 1: den oberen, das bewegliche Dach umfassenden Bereich eines erfindungsgemäßen Fahrzeugs in Seitenansicht bei geschlossenem Dach,
- Fig. 2: einen Schnitt entlang der Linie II-II in Fig. 1 mit einer den Innenhimmel formenden Führungsfläche,

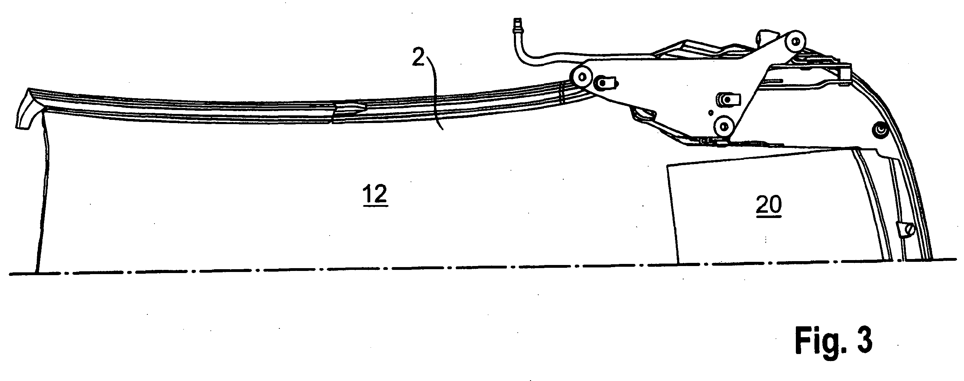

- Fig. 3: eine Ansicht des linken Dachbereichs von unten,

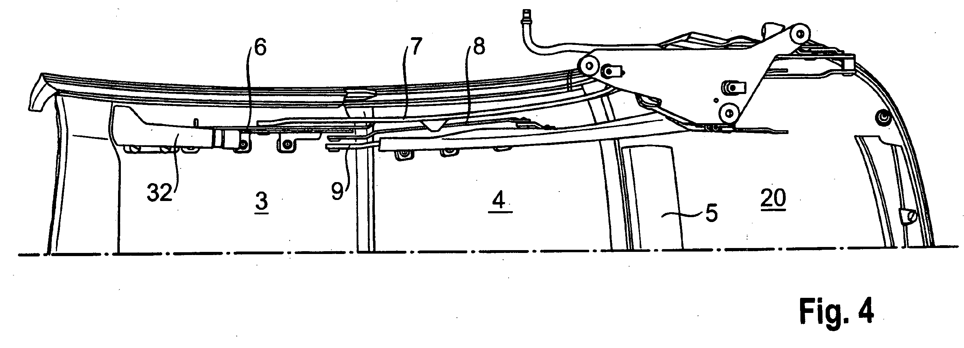

- Fig. 4: eine ähnliche Ansicht wie Fig. 3, jedoch nach Demontage des Innenhimmels,
- Fig. 5: eine ähnliche Ansicht wie Fig. 2, jedoch in einer alternativen Ausbildung, bei der die Führungsfläche an einem vorderen Gestängeteil gehalten ist,

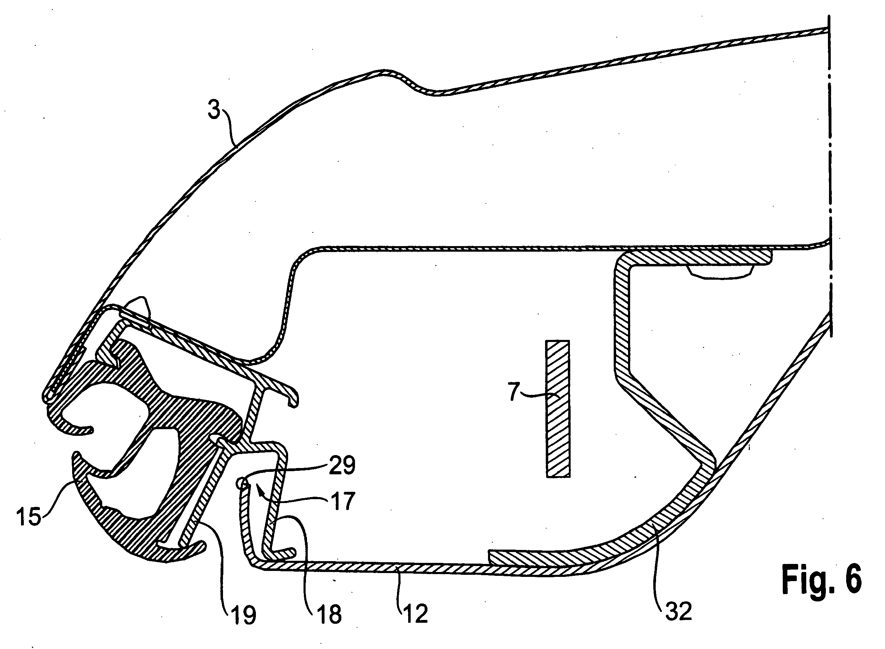

- Fig. 6: eine ähnliche Ansicht wie Fig. 5, jedoch in einer alternativen Ausbildung, bei der die Führungsfläche an einem vorderen Plattenteil des Daches gehalten ist,

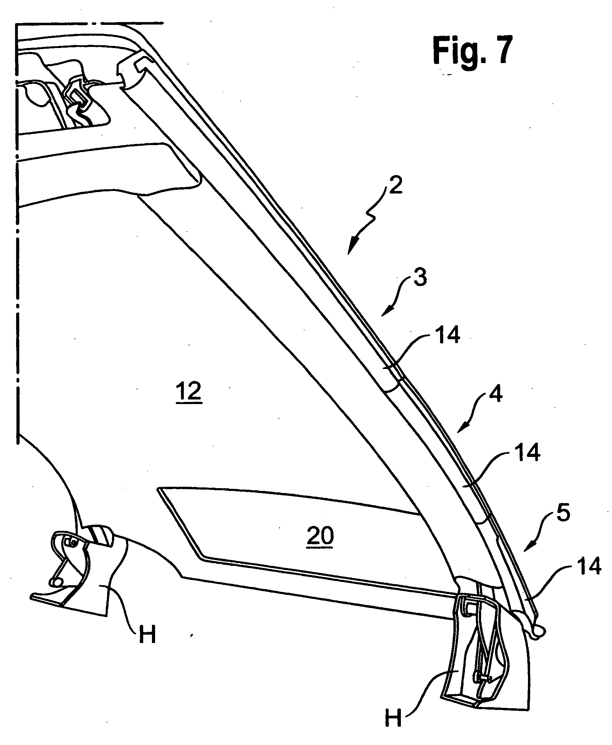

- Fig. 7: eine perspektivische Ansicht von schräg links vorne des Daches bei seiner beginnenden Öffnung,

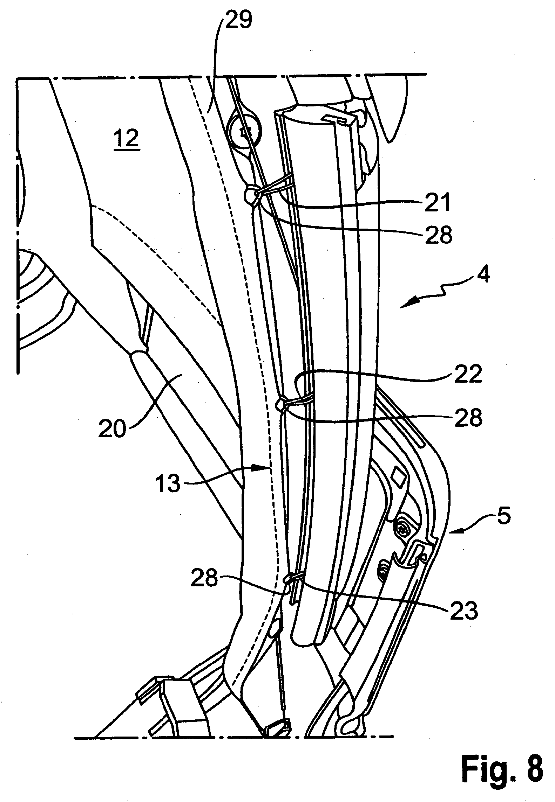

- Fig. 8: den mittleren und hinteren Bereich des Daches während seiner Öffnung aus ähnlicher Perspektive wie in Fig. 7,

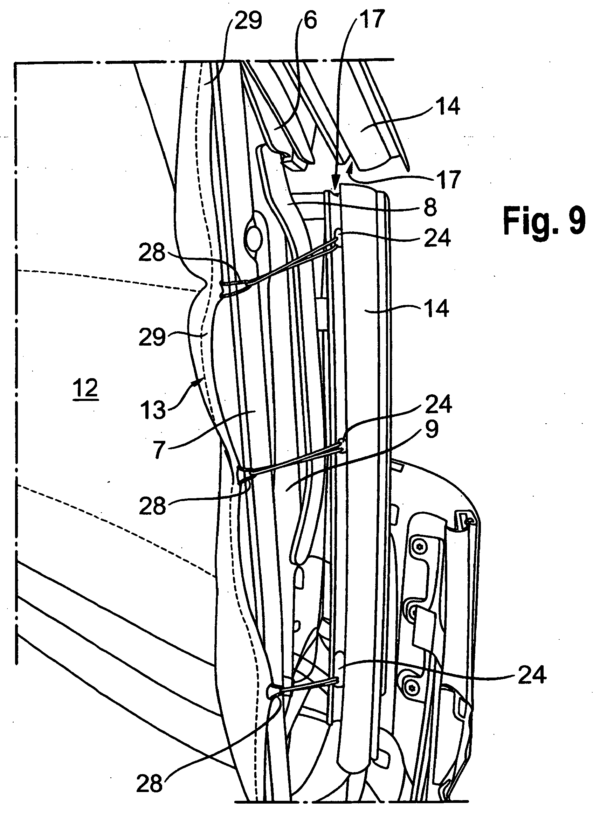

- Fig. 9: eine ähnliche Ansicht wie Fig. 8 bei weiter fortschreitender Dachöffnung,

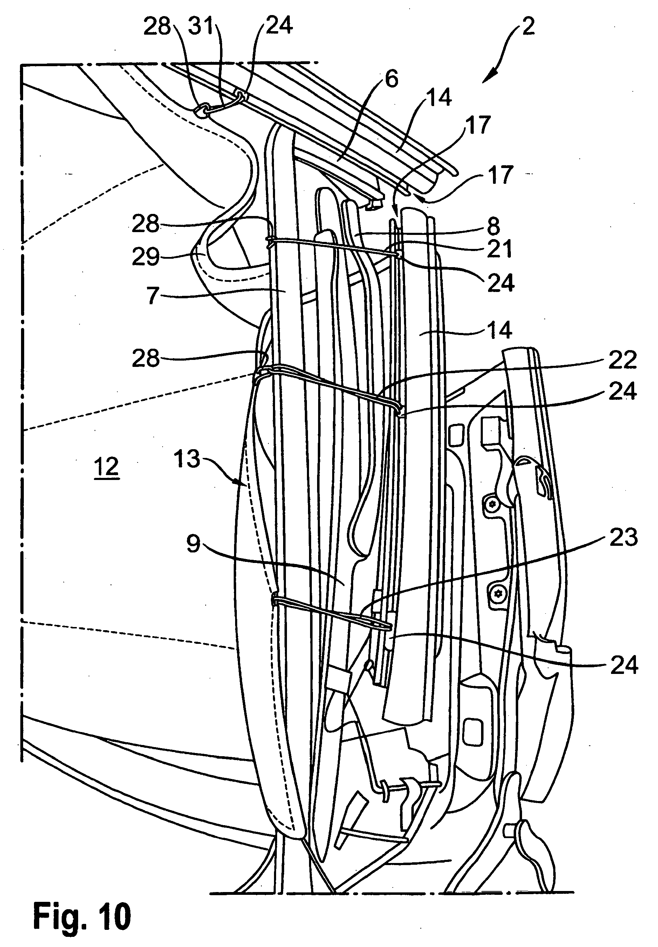

- Fig. 10: eine ähnliche Ansicht wie Fig. 9 bei weiter fortschreitender Dachöffnung, etwa in maximal gespannter Stellung der den Innenhimmel spannenden Zugseile,
- Fig. 11: eine ähnliche Ansicht wie Fig. 10 bei weiter einfaltendem Dach und sich entspannenden Zugseilen,

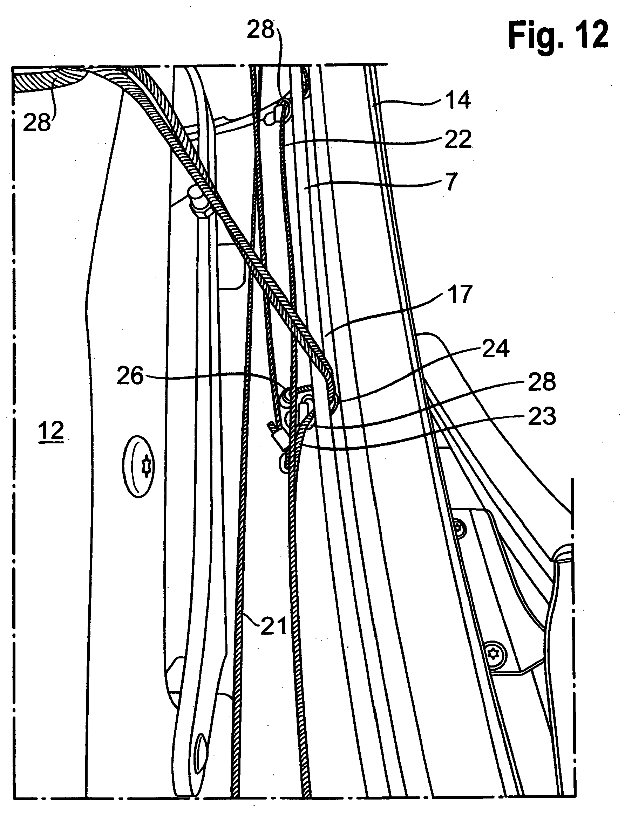

- Fig. 12: eine Detailansicht des Zugseilverlaufs von einer hinteren Anbindung um ein Gestängeteil herum zu einer weiteren Anbindung.

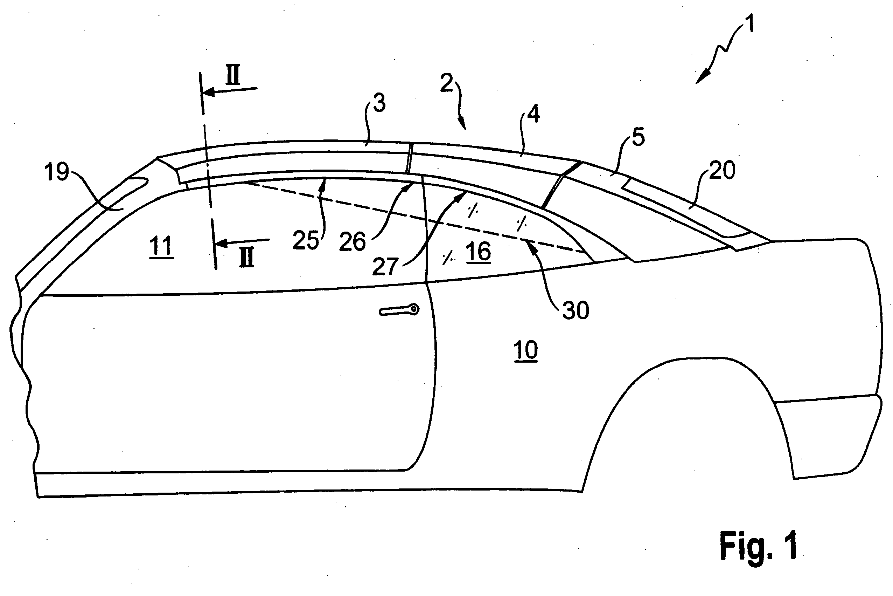

Ein erfindungsgemäßes Cabriolet-Fahrzeug 1 kann, wie in Fig. 1 dargestellt ist, ein bewegliches Dach 2 mit mehreren festen Dachteilen 3, 4, 5, ein sog. Retractable Hardtop (RHT), umfassen. Alternativ ist auch ein von einem Bezug überzogenes Soft top möglich.

In beiden Fällen ist das Dach 2 über seitliche Gestängeteile 6, 7, 8, 9 beweglich gehalten. Diese können je nach Dachform und -größe in unterschiedlicher Anzahl und Form ausgebildet sein. Sie gehen von einem im hinteren Bereich einer Fahrzeugkarosserie 10 angeordneten Hauptlager H aus und erstrecken sich mit einer Komponente in Fahrzeuglängsrichtung bis unter den vordersten Dachteil, der hier mit dem Bezugszeichen 3 versehen ist.

Das Dach 2 ist weiter mit einer dem Insassenraum 11 zugewandten und von dort aus sichtbaren Bezuglage 12, einem sog. Innenhimmel, versehen. Dieser kann auch weitere Dämmlagen umfassen und erstreckt sich bei geschlossenem Dach 2 über die gesamte Dachbreite. Dabei greift der Innenhimmel 12 mit seinen äußeren Querrändern 13 derart weit nach quer außen, dass er die Gestängeteile 6, 7, 8, 9 untergreift und optisch abdeckt. Die Querränder 13 reichen dabei bis unter seitliche Profile 14, die als Träger von Dichtungen 15 gegenüber Seitenscheiben 16 dienen. Daher sind mehrere fluchtend aufeinander folgende Profile 14 vorgesehen, die bei Dachöffnung gegeneinander einfalten können. Der Innenhimmel 12 liegt dabei an den Profilen 14 an und greift in diese ein, so dass diese als seitliche Rahmen für den Innenhimmel 12 dienen und in Doppelfunktion nicht nur gegenüber den Seitenscheiben 16 dichten, sondern auch den Innenhimmel 12 spannen. Dieser kann so zwischen den seitlichen Profilen 14 frei hängen.

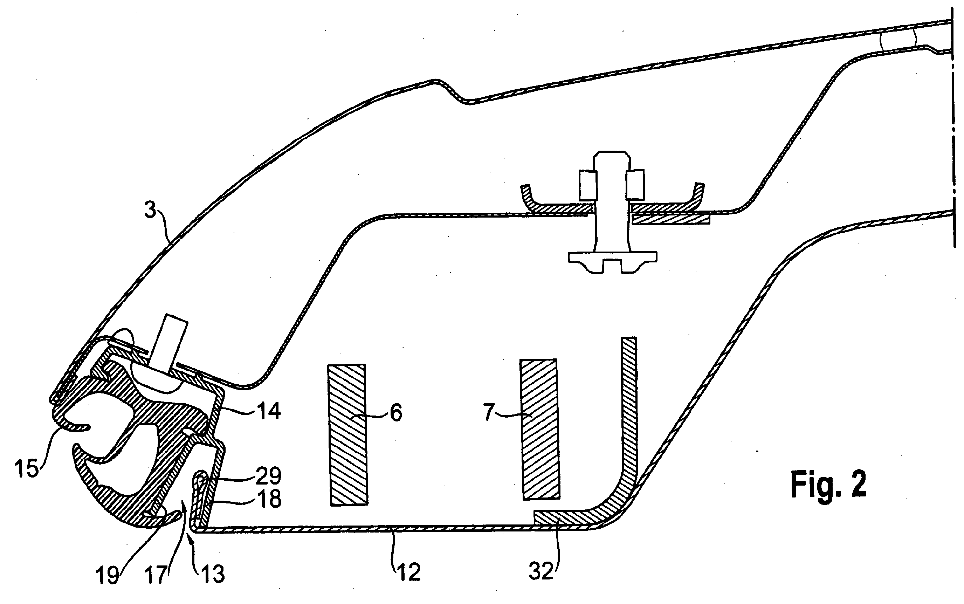

Um dieses Spannen des Innenhimmels in Querrichtung zu ermöglichen, greift bei geschlossenem Dach 2 der Innenhimmel 12 mit seinem äußeren Querrand 13 in einen nach unten offenen Längskanal 17 dieser Profile 14 ein. Dieser ist zwischen einem inneren Schenkel 18 und einem äußeren, die Dichtung 15 tragenden Schenkel 19 der Profile 14 gelegen und somit diesem äußeren Schenkel 19 unmittelbar benachbart. Dadurch hat der äußere Querrand 13 des Innenhimmels 12 in Querrichtung gegenüber der Dichtung 15 zu den seitlichen Scheiben 16 einen Querabstand von weniger als fünf Millimetern (Fig. 2). Der Innenhimmel 12 schließt daher nahezu spaltfrei an die Seitenscheiben 16 an.

Der minimierte Randspalt kann über den gesamten Längsbereich des Innenhimmels 12 zwischen einem vorderen Windschutzscheibenrahmen 19 und einer Heckscheibe 20 an seinen äußeren Querrändern 13 durchgehend und ohne Unterbrechungen des Längsverlaufs ausgebildet sein. Über seinen gesamten Verlauf greift der Innenhimmel 12 bis unter die seitlichen Profile 14 und liegt an diesen an, ist jedoch zumindest bereichsweise beim Dachöffnen daraus lösbar, so dass Quereinschnitte oder ähnliche Unterbrechungen des Innenhimmels 12 im Bereich von Gelenken der Gestängeteile vollständig vermeidbar sind und der Innenhimmel seine optisch vorteilhafte und gegen Eingriff sichernde großflächig durchgehende Gestalt erhält. Irgendwelche Schwenkklappen oder voneinander getrennte Stoffabschnitte zur Gestängeabdeckung sind vollständig entbehrlich. Der optische Eindruck vom Insassenraum 11 aus ist entscheidend verbessert.

Der Innenhimmel 12 ist über zumindest einen Teil seiner Längserstreckung seitlich über Spannelemente 21, 22, 23, 31 gehalten, die seitliche Gestängeteile 6, 7, 8, 9 untergreifen und von seitlich außen umlaufen. Dadurch ist die Abdekkung der Gestängeteile zuverlässig gesichert. Dennoch kann beim Einfalten des Daches der Innenhimmel 12 so weit nach quer innen gezogen und sich dadurch von den Gestängeteilen lösen, dass diese gegeneinander einfalten können, ohne den Innenhimmel 12 einzuklemmen.

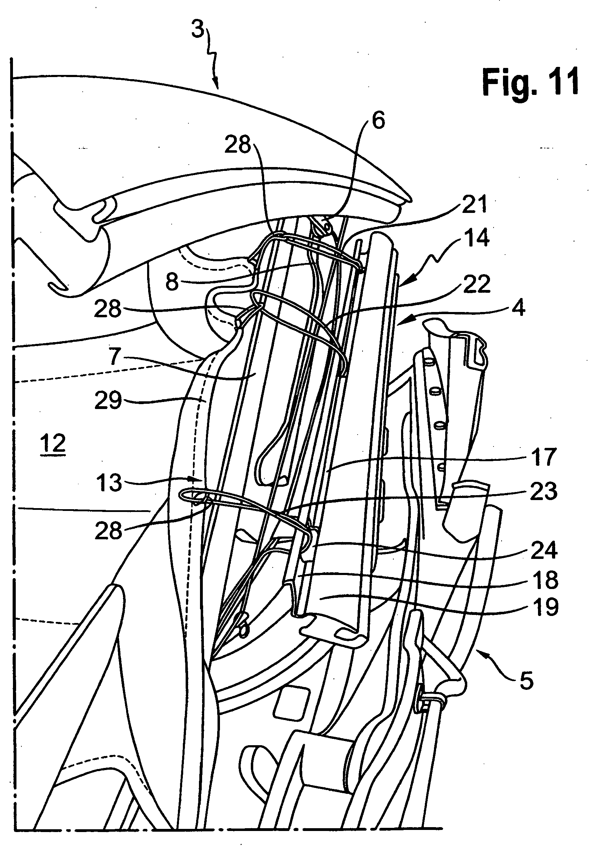

Die Spannelemente 21, 22, 23, 31 sind hier durch elastische Zugseile - eventuell mit gesonderten Federelementen - gebildet. Die Spannelemente 21, 22, 23, 31 gehen jeweils von einem dachfesten Anbindungspunkt 25, 26, 27 - hier nur für die hinteren drei Spannelemente 21, 22, 23 angedeutet - im Nahbereich eines hinteren Hauptlagers H zur Anbindung der Gestängeteile 6, 7, 8, 9 aus (auch ein näherer Anbindungspunkt mit einem Längenreservoir, etwa über eine Spule, ist möglich), durchlaufen über Ausnehmungen 24 den Längskanal 17 von innen nach außen, laufen außen um die Gestängeteile 6, 7, 8, 9 herum und durchgreifen randseitige Ösen 28 des Innenhimmels 12. Von dort aus greifen die Seile 21, 22, 23 von außen in den Längskanal der seitlichen Profile 14 über die Bohrungen 24 ein (Fig. 11) und laufen längs zum Dachverlauf zu einer gemeinsamen Anbindung im hinteren Dachbereich im Nahbereich eines Hauptlagers H. Dadurch ziehen diese hier drei oder mehr Spannseile 21, 22, 23 an jedem Queraußenrand beim Dachschließen den Innenhimmel 12 in den Längskanal 17. Ein längs verlaufendes Spannseil in einer Seitenwulst 29 des Innenhimmels 12 wird zudem von seinem unbeeinflussten Verlauf 30 (Fig. 1) in die Eingriffslage an den Profilen 14 gezwungen. Je nach Dachverlauf ist auch eine geringe Anzahl von Spannseilen möglich.

Das Dach 2 muss nicht über seinen gesamten Längsverlauf in der geschilderten Weise von den Profilen 14 abheben können, sondern im vorderen Bereich vor dem ersten Gelenk zwischen den Gestängeteilen 6 einerseits und 7 bzw. 8 andererseits kann es fest in den Kanal 17 des Profils 14 eingreifen und dabei nach quer außen über eine im Nahbereich jedes Querrandes 13 angeordnete gewölbte Führungsfläche 32, zum Beispiel aus Draht oder Kunststoff, zur Formgebung gelegt, insbesondere spannend gezogen sein. Sofern der Innenhimmel 12 beim Schließen des Daches 2 über die fest mit der Dachaußenhaut oder mit einem oberen Spriegel des Daches 2 verbundene (Fig. 2) Führungsfläche 32 bewegbar ist, ist auch hier eine faltenfreie Querspannung des Innenhimmels 12 besonders effektiv möglich.

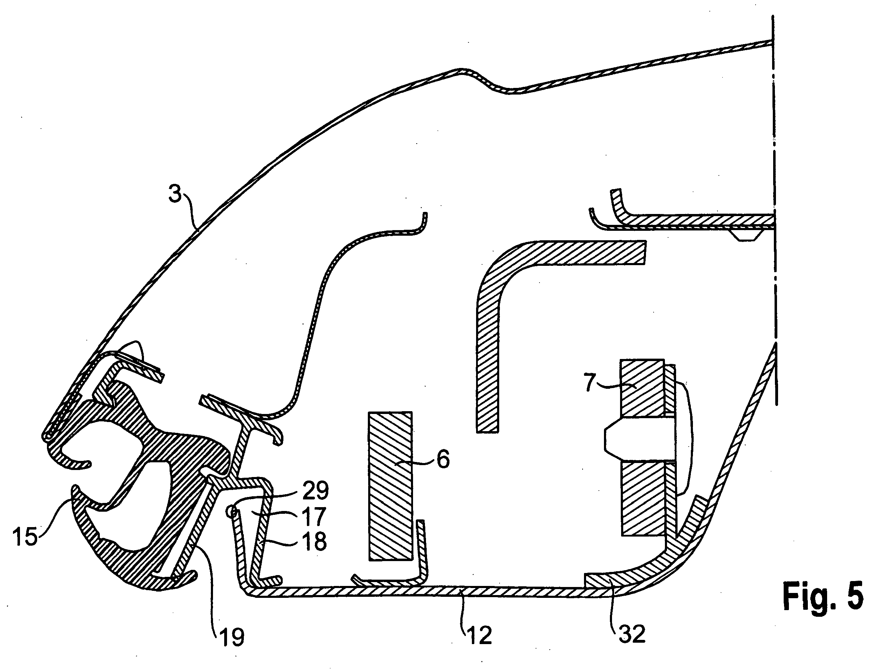

Alternativ zur Anbindung der konvex gekrümmten Führungsfläche, die besonders glatt ausgebildet sein kann, an das äußere Dachteil 3 kann auch eine Anbindung an eines der Gestängeteile 6, 7 erfolgen, wie in Figur 5 angedeutet ist. Auch dann wird beim Schließen des Daches der Innenhimmel 12 über die Führungsfläche 32 in Form gezogen. Auch eine integrale Ausbildung mit einem Lenker 6, 7 ist möglich. Ein Einnähen eines formgebenden Elements an den Innenhimmel 12 ist nicht erforderlich. Dessen durchgängige Oberfläche wird daher nicht von hierfür erforderlichen Nähten unterbrochen.

Ein Fahrzeugdach 2 mit den genannten Eigenschaften zur Ausbildung des Innenhimmels 12 ist separat beansprucht.

## Patentansprüche

1. Fahrzeugdach (2) für ein Cabriolet-Fahrzeug (1), das über seitliche Gestängeteile (6;7;8;9) beweglich ge-genüber einer Fahrzeugkarosserie (10) gehalten ist und das eine dem Insassenraum (11) zugewandte Bezuglage (12), einen sog. Innenhimmel, umfasst, wobei der Innenhimmel (12) bei geschlossenem Dach (2) an seinen äußeren Querrändern (13) bis unter seitliche Profile (14) und an diese anliegend erstreckt ist und der Innenhimmel (12) mit seinem äußeren Querrand (13) in einen Kanal (17) dieser Profile (14) eingreift, und wobei die seitlichen Profile (14) als Träger von Dichtungen (15) gegenüber Seitenscheiben (16) ausgebildet sind,
**dadurch gekennzeichnet,**
**dass** der Kanal (17) einem äußeren, die Dichtung (15) gegenüber seitlichen Scheiben (16) tragenden Schenkel (19) der Profile (14) unmittelbar benachbart ist.

2. Fahrzeugdach (2) nach Anspruch 1,
**dadurch gekennzeichnet,**
**dass** der äußere Querrand (13) des Innenhimmels (12) in Querrichtung gegenüber der Dichtung (15) einen Querabstand von weniger als fünf Millimetern aufweist.

3. Fahrzeugdach (2) nach einem der Ansprüche 1 oder 2,
**dadurch gekennzeichnet,**
**dass** der Innenhimmel (12) in einem Längsbereich zwischen einem vorderen Windschutzscheibenrahmen (19) und einer Heckscheibe (20) an seinen äußeren Querrändern (13) durchgehend und ohne Unterbrechungen des Längsverlaufs bis unter seitliche Profile (14) erstreckt ist, die als Träger von Dichtungen (15) gegenüber Seitenscheiben (16) dienen.

4. Fahrzeugdach (2) nach einem der Ansprüche 1 bis 3,
**dadurch gekennzeichnet,**
**dass** der Innenhimmel (12) über zumindest einen Teil seiner Längserstreckung seitlich über Spannelemente (21;22;23;31) gehalten ist, die seitliche Gestängeteile (6;7;8;9) untergreifen und von seitlich außen umlaufen.

5. Fahrzeugdach (2) nach Anspruch 4,
**dadurch gekennzeichnet,**
**dass** Spannelemente (21;22;23;31) von außen in längs erstreckte Profile (14) eingreifen, die Träger von Dichtungen (15) zur Abdichtung gegenüber seitlichen Scheiben (16) sind.

6. Fahrzeugdach (2) nach Anspruch 5,
**dadurch gekennzeichnet,**
**dass** die Profile (14) einen äußeren Schenkel (19) zur Halterung der Dichtung (15) und beabstandet hierzu einen weiter innen liegenden Schenkel (18) aufweisen, wobei der innere Schenkel (18) von dem Innenhimmel (12) untergriffen ist und dessen Rand (13) in einen Kanal (17) zwischen dem äußeren (19) und dem inneren Schenkel (18) eingreift.

7. Fahrzeugdach (2) nach Anspruch 6,
**dadurch gekennzeichnet,**
**dass** Spannelemente (21;22;23;31) durch Zugseile gebildet sind.

8. Fahrzeugdach (2) nach einem der Ansprüche 5 bis 7,
**dadurch gekennzeichnet,**
**dass** Spannelemente (21;22;23;31) rückseitig ihres Eingriffs in das Profil (14) zu einer Umlenköse (28) geführt und von dort mit zu einer Anbindung im hinteren Dachbereich verlaufen.

9. Fahrzeugdach (2) nach Anspruch 8,
**dadurch gekennzeichnet,**
**dass** über den Längsverlauf des Innenhimmels (12) zumindest drei Spannelemente (21;22;23) für jede Queraußenseite (13) vorgesehen sind.

10. Fahrzeugdach (2) nach einem der Ansprüche 1 bis 9,
**dadurch gekennzeichnet,**
**dass** das Dach (2) als Retractable Hardtop (RHT) mit mehreren an ihrer Außenfläche voneinander getrennten und in sich jeweils starren und im wesentlichen plattenförmigen Dachteilen (3;4;5) ausgebildet ist.

11. Fahrzeugdach (2) nach einem der Ansprüche 1 bis 10,
**dadurch gekennzeichnet,**
**dass** das Dach (2) auf seiner dem Insassenraum (11) zugewandten Seite im Nahbereich jedes Querrandes (13) zumindest eine gewölbte Führungsfläche (32) zur formgebenden Anlage des Innenhimmels (12) an diese aufweist.

12. Fahrzeugdach (2) nach Anspruch 11,
**dadurch gekennzeichnet,**
**dass** der Innenhimmel (12) beim Schließen des Daches (2) über die fest mit der Dachaußenhaut oder einem Gestängeteil (6;7) verbundene Führungsfläche (32) bewegbar ist.

13. Cabriolet-Fahrzeug (1) mit einem beweglichen Dach (2) nach einem der Ansprüche 1 bis 12.

## Claims

1. A vehicle roof (2) for a convertible vehicle (1), said roof (2) being held by lateral linkage members (6; 7; 8; 9) so as to be movable with respect to a vehicle body (10) and comprising a cover layer (12), known as an internal roof lining and facing the occupant space (11), the outer transverse edges (13) of said internal roof lining (12) extending as far as below lateral profiles (14) and contacting them, when the roof (2) is closed, and the outer transverse edge (13) of the internal roof lining (12) engaging with a channel (17) of said profiles (14), and wherein the lateral profiles (14) are provided as supports for seals (15) with respect to side windows (16), **characterised in that** the channel (17) is located immediately adjacent to an outer arm (19) of the profiles (14) which carries the seal (15) with respect to side windows (16).

2. The vehicle roof (2) according to claim 1, **characterised in that** the outer transverse edge (13) of the internal roof lining (12) is located at a transverse distance of less than five millimetres from the seal (15) in a transverse direction.

3. The vehicle roof (2) according to any one of claims 1 or 2, **characterised in that**, at its outer transverse edges (13), the internal roof lining (12) extends in a longitudinal region between a front windscreen frame (19) and a rear window (20), continuously and without interruptions of its longitudinal extent, as far as below lateral profiles (14) which serve as supports for seals (15) with respect to side windows (16).

4. The vehicle roof (2) according to any one of claims 1 to 3, **characterised in that** the internal roof lining (12) is held laterally, over at least part of its longitudinal extent, by tensioning elements (21; 22; 23; 31) which engage under lateral linkage members (6; 7; 8; 9) and extend around them from laterally outside.

5. The vehicle roof (2) according to claim 4, **characterised in that** tensioning elements (21; 22; 23; 31) engage from outside with longitudinally extending profiles (14) which are supports for seals (15) provided for sealing with respect to side windows (16).

6. The vehicle roof (2) according to claim 5, **characterised in that** the profiles (14) comprise an outer arm (19) for holding the seal (15) and, at a distance therefrom, an arm (18) located further inwards, under which inner arm (18) the internal roof lining (12) engages and whose edge (13) engages with a channel (17) between the outer arm (19) and the inner arm (18).

7. The vehicle roof (2) according to claim 6, **characterised in that** tensioning elements (21; 22; 23; 31) are formed by load cables.

8. The vehicle roof (2) according to any one of claims 5 to 7, **characterised in that** the tensioning elements (21; 22; 23; 31) are guided, rearward of their engagement with the profile (14), to a guide eyelet (28), from which they extend up to a connection in the rear roof portion.

9. The vehicle roof (2) according to claim 8, **characterised in that** at least three tensioning elements (21; 22; 23) are provided for each transverse outer surface (13) over the longitudinal extent of the internal roof lining (12).

10. The vehicle roof (2) according to any one of claims 1 to 9, **characterised in that** the roof (2) is provided as a retractable hard top (RHT) comprising a plurality of roof parts (3; 4; 5) which are separated from each other at their outer surfaces, each of them being inherently rigid and substantially plate-shaped.

11. The vehicle roof (2) according to any one of claims 1 to 10, **characterised in that** the roof (2) comprises, on its side facing the occupant space (11), in the vicinity of each transverse edge (13), at least one arched guide surface (32) for snug-fitting contact of the internal roof lining (12) with said guide surface (32).

12. The vehicle roof (2) according to claim 11, **characterised in that**, when closing the roof (2), the internal roof lining (12) can be moved over the guide surface (32) which is securely connected to the outer roof shell or a linkage member (6; 7).

13. A convertible vehicle (1) comprising a movable roof (2) according to any one of claims 1 to 12.

## Revendications

1. Toit de véhicule (2) pour un véhicule cabriolet (1), ledit toit (2) étant supporté par des pièces de tringlerie latérales (6; 7; 8; 9) de manière déplaçable par rapport à une carrosserie (10) et comportant une couche de revêtement (12), dit habillage de plafond et tourné vers l'habitacle (11), les bords transversaux extérieurs (13) dudit habillage de plafond (12) s'étendant jusqu'au-dessous de profils latéraux (14) et venant en contact avec ces derniers, lorsque le toit (2) est fermé, et le bord transversal extérieur (13) de l'habillage de plafond (12) venant en prise dans un canal (17) desdits profils (14), et les profils latéraux (14) étant réalisés en tant que supports pour des joints d'étanchéité (15) par rapport à des fenêtres latérales (16), **caractérisé en ce que** le canal (17) se trouve au voisinage immédiat d'un bras extérieur (19) des profils (14) qui porte le joint d'étanchéité (15) par rapport à des fenêtres latérales (16).

2. Toit de véhicule (2) selon la revendication 1, **caractérisé en ce que** le bord transversal extérieur (13) de l'habillage de plafond (12) se trouve à une distance transversale de moins de cinq millimètres du joint d'étanchéité (15) en direction transversale.

3. Toit de véhicule (2) selon l'une quelconque des revendications 1 ou 2, **caractérisé en ce que** les bords transversaux extérieurs (13) de l'habillage de plafond (12) s'étendent dans une région longitudinale entre un cadre de pare-brise avant (19) et une lunette arrière (20), de manière continue et sans interruption de l'extension longitudinale, jusqu'au-dessous de profils latéraux (14) qui servent comme supports pour des joints d'étanchéité (15) par rapport à des fenêtres latérales (16).

4. Toit de véhicule (2) selon l'une quelconque des revendications 1 à 3, **caractérisé en ce que** l'habillage de plafond (12) est retenu latéralement, sur au moins une partie de son extension longitudinale, par des éléments de serrage (21; 22; 23; 31) qui viennent en prise sous des pièces de tringlerie latérales (6; 7; 8; 9) et entourent celles-ci latéralement par l'extérieur.

5. Toit de véhicule (2) selon la revendication 4, **caractérisé en ce que** des éléments de serrage (21; 22; 23; 31) viennent en prise par l'extérieur dans des profils (14) qui s'étendent en direction longitudinale et sont des supports pour des joints d'étanchéité (15) pour réaliser une étanchéité par rapport à des fenêtres latérales (16).

6. Toit de véhicule (2) selon la revendication 5, **caractérisé en ce que** les profils (14) comportent un bras extérieur (19) pour supporter le joint d'étanchéité (15) et, espacé de celui-ci, un bras (18) disposé plus à l'intérieur, sous lequel bras intérieur (18) l'habillage de plafond (12) vient en prise et dont le bord (13) vient en prise dans le canal (17) entre le bras extérieur (19) et le bras intérieur (18).

7. Toit de véhicule (2) selon la revendication 6, **caractérisé en ce que** des éléments de serrage (21; 22; 23; 31) sont réalisés par des câbles de traction.

8. Toit de véhicule (2) selon l'une quelconque des revendications 5 à 7, **caractérisé en ce que** des éléments de serrage (21; 22; 23; 31) sont guidés, derrière leur engrenage dans les profils (14), vers un oeillet de renvoi (28), à partir duquel ils s'étendent jusqu'à une liaison dans la partie arrière du toit.

9. Toit de véhicule (2) selon la revendication 8, **caractérisé en ce qu'**au moins trois éléments de serrage (21; 22; 23; 13) sont réalisés pour chaque face extérieure transversale (13) sur l'extension longitudinale de l'habillage des plafond (12).

10. Toit de véhicule (2) selon l'une quelconque des revendications 1 à 9, **caractérisé en ce que** le toit (2) est réalisé sous forme d'un toit rigide escamotable (retractable hard top = RHT), comportant plusieurs parties de toit (3; 4; 5) qui sont séparées l'une de l'autre à leurs faces extérieures, chacune desdites parties étant rigide en soi et réalisée sensiblement sous forme d'une plaque.

11. Toit de véhicule (2) selon l'une quelconque des revendications 1 à 10, **caractérisé en ce que** le toit (2) comporte, de son côté tourné vers l'habitacle (11) et au voisinage de chaque bord transversal (13), au moins une surface de guidage (32) bombée pour que l'habillage de plafond (12) vienne en contact avec la surface de guidage (32) en épousant la forme de cette dernière.

12. Toit de véhicule (2) selon la revendication 11, **caractérisé en ce que**, lors de la fermeture du toit (2), l'habillage de plafond (12) peut être déplacé sur la surface de guidage (32) qui est fixée au revêtement extérieur du toit ou à une pièce de tringlerie (6; 7).

13. Véhicule cabriolet (1) comportant un toit déplaçable (2) selon l'une quelconque des revendications 1 à 12.
